# EUROPÄISCHE PATENTANMELDUNG

(11) **EP 4 737 844 A1**
(43) Veröffentlichungstag der Anmeldung: **06.05.2026**
(21) Anmeldenummer: 25186750.3
(22) Anmeldetag: 01.07.2025
(51) Int. Cl.: G01B 5/012

(54) **TASTMESSVORRICHTUNG**

(30) Priorität: 04.11.2024 DE 102024132053
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(57) **Zusammenfassung**

Die Erfindung betrifft eine **Tastmessvorrichtung** mit einem Gehäuse, einem in dem Gehäuse gelagerten Tasthebel und einem Tragschaft, welcher radial justierbar, am Gehäuse aufliegend am Gehäuse befestigbar ist.

Erfindungsgemäß ist vorgesehen, dass die radiale Justierung des Tragschafts am Gehäuse axial in Richtung zum Tasthebel hin nach der Auflage des Tragschafts am Gehäuse erfolgt.

## Beschreibung

Die Erfindung betrifft eine **Tastmessvorrichtung.**

Beispielsweise aus den deutschen Patent- bzw. Offenlegungsschriften DE 41 00 323 C2, DE 195 02 840 C2 und DE 100 14 630 A1 sind Tastmessgeräte, hier Mehrkoordinaten-Tastmessgeräte, bekannt.

Solche Mehrkoordinaten-Tastmessgeräte können in Werkzeugmaschinen (oder Messgeräten oder dergleichen) bzw. deren Spindel eingespannt werden - und ermöglichen es, die Spindelachse exakt an Werkstück- oder Vorrichtungskanten zu positionieren. Somit können schnell und einfach Werkstück-Nullpunkte gesetzt und Längen- bzw. Abstandsmessungen durchgeführt werden.

Bei diesen bekannten, u.a. einen Tasthebel mit einem Tastelement an deren Ende aufweisenden Mehrkoordinaten-Tastmessgeräten ist deren Tasthebel in Richtung einer durch Führungen eines Gehäuses definierten Hauptkoordinatenachse/Messachse verschiebbar - und mittels eines Universalgelenks quer zu dieser Hauptkoordinatenachse/Messachse auslenkbar. Die Bewegungen des Tasthebels werden sensorisch erfasst - und daraus oben erwähnte Längen- bzw. Abstandswerte ermittelt.

Das Gehäuse ist - über korrespondierende, aneinander anliegende, hier achsnormale Auflage-/Führungs- bzw. Passflächen - an einem Tragschaft gehalten (kurz als Auf-/Anlage bezeichnet), dessen Tragschaftachse im Gebrauchszustand gleichachsig zur Hauptkoordinatenachse/Messachse verläuft. Für die Halterung/Fixierung des Tragschafts am Gehäuse ist eine axiale Spannschraube vorgesehen, die den Tragschaft mit dem Gehäuse - über die korrespondierenden, aneinander anliegenden, hier achsnormalen Auflage-/Führungs- bzw. Passflächen bzw. über die erwähnte Anlage/Auflage - verspannt verschraubt.

Über eine Normkupplung (oder sonstigen Werkzeugaufnahme), beispielsweise mit einem Steilkegelschaft, wird dann das Mehrkoordinaten-Messgerät in der Spindel der Werkzeugmaschine (oder des Messgerätes) gehalten.

Um den Mittelpunkt des Tastelementes mit der Drehachse der Spindel der Werkzeugmaschine oder des Messgerätes zentrieren zu können, greift das Gehäuse - dem Tragschaft zugewandt - mit einem Zapfen am Gehäuse in eine ein radiales Spiel zwischen dem Tragschaft und dem Zapfen zulassende Aussparung des Tragschafts ein.

Das Gehäuse ist damit, d.h. wegen des Spiels, gleichachsig zu dem Tragschaft radial beweglich und verschiebbar - und kann mit Hilfe mehrerer an dem Tragschaft gehaltener, gegen den Zapfen zustellbarer Stell-/Justierschrauben zentriert bzw. justiert werden (Justierung).

Eine solche durch den Tragschaft und das Gehäuse gebildete Zentrierung/Justierung (zur Erreichung bzw. Gewährleistung der Zentrierung des Mittelpunktes des Tastelementes mit der Drehachse der Spindel) hat maßgeblichen Einfluss auf die Messgenauigkeit des Mehrkoordinaten-Tastmessgeräts. Darüber hinaus definiert sie maßgeblich die Geometrie, insbesondere die Abmessungen, wie Länge und Baugröße, des Mehrkoordinaten-Tastmessgeräts.

Es ist Aufgabe der Erfindung, die im Stand der Technik bekannten Mehrkoordinaten-Tastmessgerät zu verbessern.

Diese Aufgabe wird gelöst durch eine **Testmessvorrichtung** mit den Merkmalen des unabhängigen Anspruchs.

Vorteilhafte Weiterbildungen der Erfindung sind Gegenstand abhängiger Ansprüche sowie der nachfolgenden Beschreibung.

Gegebenenfalls verwendete Begriffe, wie oben, unten, vorne, hinten, links oder rechts sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrieachsen hier beschriebener Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

### Gegenstand der Erfindung

Die **Tastmessvorrichtung,** wie insbesondere eine Mehrkoordinaten-Tastmessvorrichtung, sieht ein Gehäuse, einen in dem Gehäuse gelagerten Tasthebel und einen Tragschaft vor, welcher radial justierbar ("radiale Justierung"), am Gehäuse aufliegend ("Auflage/Anlage") am Gehäuse befestigbar bzw. befestigt ist.

Weiter ist vorgesehen, dass die radiale Justierung des Tragschafts am Gehäuses axial in Richtung zum Tasthebel hin nach der Auflage des Tragschafts am Gehäuse erfolgt. Kurz und anschaulich, die radiale Justierung befindet sich vom gehäuseseitigen Ende des Tragschafts kommend in Axialrichtung vor der Auflage.

Die **Tastmessvorrichtung** kann so die radiale Zentrierung (zur Erreichung bzw. Gewährleistung der Zentrierung des Mittelpunktes des Tastelementes mit der Drehachse der Spindel) innerhalb der Außenkontur des Gehäuses bzw. "ins Gehäuse" "verlagern"/"verschieben", wodurch - verringert sich so die axiale Länge der **Tastmessvorrichtung** - die **Tastmessvorrichtung** wesentlich kompakter und stabiler bauen kann - und dadurch wiederum auch die Messgenauigkeit der Messvorrichtung verbessert werden kann.

Wo so auch die radiale Justierung des Tragschafts am Gehäuse axial in Richtung zum Tasthebel hin nach der Auflage des Tragschafts am Gehäuse - und so insbesondere (Gehäuse seitig) endseitig des Tragschafts - erfolgt bzw. erfolgen kann, kann die radiale Justierung/Zentrierung auf einem radial größeren Durchmesser erfolgen, wodurch ebenfalls wieder die Stabilität und Justiergenauigkeit bei der **Tastmessvorrichtung** erhöht werden kann.

Die **Tastmessvorrichtung** trägt so zu einer wesentlichen Verbesserung von Tastmessgeräten, insbesondere Mehrkoordinaten-Tastmessgeräten, bei.

### Abhängige Gegenstände der Erfindung

Die **Tastmessvorrichtung** kann weiter auch vorsehen, dass der Tragschaft einerends einen Verbindungsflansch, welcher einen eine Zentrier-/Justieröffnung ausbildenden Ringfortsatz/- abschnitt aufweist, aufweist. Dieses erweist sich deshalb als besonders vorteilhat, da durch den Verbindungsflansch mit Zentrier-/Justieröffnung - wie erwähnt - die radiale Justierung/Zentrierung auf einem radial größeren Durchmesser realisiert werden kann.

Weiterhin kann vorgesehen werden, dass das Gehäuse eine einen Zapfen ausbildende Ringnut aufweist. Dabei ist es besonders zweckmäßig, wenn die Ringnut konzentrisch zur (durch Führungen des Tasthebels im Gehäuse definierte) Hauptkoordinatenachse/Messachse verläuft. Der Zapfen bildet sich so dann zentriert zur Hauptkoordinatenachse/Messachse aus.

Besonders zweckmäßig ist es auch, wenn der Zapfen einstückig mit dem Gehäuse ausgebildet ist, erhöht sich dadurch die Stabilität der **Tastmessvorrichtung.**

Weiterhin kann vorgesehen werden, dass eine axiale Stirnseite des Zapfens von anderen Gehäuseaußenflächen axial überragt wird. Anschaulich gesagt, der Zapfen wird - axial - kurzgehalten und verschwindet so innerhalb der Außenkontur des Gehäuses der **Tastmessvorrichtung,** wodurch die radiale Zentrierung (zur Erreichung bzw. Gewährleistung der Zentrierung des Mittelpunktes des Tastelementes mit der Drehachse der Spindel) innerhalb der Außenkontur des Gehäuses bzw. "ins Gehäuse" "verlagert"/"verschoben" werden kann.

Insbesondere ist es ferner - für die radiale Justierung bzw. die Einstellung Mittelpunkt Tastelement/Drehachse Spindel - zweckmäßig, wenn der Ringfortsatz/-abschnitt mit, insbesondere radialem (und/oder axialem), Spiel in die Ringnut (am Gehäuse) eingreift. Das - insbesondere - radiale Spiel ermöglicht so eine radiale Verschiebung von Gehäuse relativ zum Tragschaft bzw. der Hauptkoordinatenachse/Messachse relativ zur Tragschaftachse, wodurch die radiale Justierung bzw. bzw. die Einstellung Mittelpunkt Tastelement/Drehachse Spindel bewerkstelligt werden kann.

Auch kann vorgesehen sein, dass der Ringfortsatz/-abschnitt mehrere, bevorzugt drei oder vier, gleichmäßig über den Umfang verteilt angeordnete Gewindelöcher für Justierschrauben/Einstellschrauben aufweist. Stützen sich die gewindeseitigen Enden der Justierschrauben gegen den Zapfen ab (, werden sie in die Gewindelöcher eingeschraubt, wobei der Ringfortsatz/-abschnitt in die Ringnut eingreift), so kann - in ausgerichteter zentrierter Lage/Position - der Tragschaft am Gehäuse fixiert werden. Das Gehäuse kann dazu auch Durchgangsbohrungen oder Aussparungen bzw. Ausnehmungen vorsehen, durch welche die Justierschrauben durchgesteckt bzw. eingeschoben werden - und dann in die Gewindelöcher eingeschraubt und mit einem entsprechenden Schlüssel betätigt werden können.

Bevorzugt ist es auch, wenn eine erste, die Auflage ausbildende, insbesondere achsnormale, Auflage-/Führungs- bzw. Passfläche am Zapfen bzw. an dessen Stirnseite ausgebildet ist - und eine korrespondierende (, weil anliegend an der ersten Auflage-/Führungs- bzw. Passfläche am Zapfen,) zweite, die Auflage ausbildende, insbesondere achsnormale, Auflage-/Führungs- bzw. Passfläche am Verbindungsflansch bzw. an einer Stirnseite des Verbindungsflansches ausgebildet ist. "Achsnormal" kann dabei bezüglich der Hauptkoordinatenachse/Messachse, insbesondere im Fall der ersten Auflage-/Führungs- bzw. Passfläche am Zapfen, oder der Tragschaftachse, insbesondere im Fall der zweiten Auflage-/Führungs- bzw. Passfläche am Verbindungsflansch, verstanden werden.

Weiter kann hier zweckmäßig sein, wenn die korrespondierende zweite Auflage-/Führungs- bzw. Passfläche am Verbindungsflansch radial innerhalb des Ringfortsatzes/-abschnitts des Verbindungsflansches ausgebildet ist. Hierdurch kann die Auflage radial innerhalb der radialen Justierung/Zentrierung realisiert werden - und so die radiale Justierung/Zentrierung auf einem radial größeren Durchmesser erfolgen.

Zweckmäßig ist es auch, wenn der Tragschaft eine axiale Bohrung für eine axiale Spannschraube, mit welcher der Tragschaft mit dem Gehäuse verschraubbar bzw. verspannbar ist, aufweist.

Bevorzugt kann auch vorgesehen sein, dass bei dem Gehäuse, insbesondere in dem Zapfen des Gehäuses, in einer Aussparung eine, insbesondere ein Innengewinde aufweisende, Buchse eingesetzt ist, mit bzw. in welcher eine bzw. die erwähnte axiale Spannschraube verbindbar bzw. einschraubbar ist.

Ferner kann weiterbildend ausgeführt sein, dass der um einen Schwenkpunkt schwenkbare Tasthebel einerends des Schwenkpunkts einen eine Tast-/Messspitze mit einem Tastelement aufweisenden Tast-/Messarm und andererends des Schwenkpunkts einen Koppelarm aufweist, wobei insbesondere am freien Ende des Koppelarmes eine konvexe, insbesondere kugelförmige, äußere Steuerfläche ausgebildet ist.

Hier kann weiter dann auch vorgesehen sein, dass in dem Gehäuse ein, insbesondere hülsenförmiges, Kopplungsstück axial in Richtung einer Hauptkoordinatenachse/Messachse verschiebbar geführt ist, welches insbesondere einerends eine innere, an der äußeren Steuerfläche anliegende, Steuerfläche in Form einer Kegelstumpffläche mit bevorzugt geradliniger Erzeugenden ausbildet.

Zur Realisierung der erwähnten Schwenkbarkeit des Tasthebels kann bevorzugt ein Universalgelenk, beispielsweise in Form eines Kugelgelenks, vorgesehen sein, wobei die Kugel des Kugelgelenks an dem Tasthebel, die Gelenkpfanne im Gehäuse ausgebildet sein kann.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf und sind - der Übersichtlichkeit halber - gegebenenfalls nicht in allen Figuren eingetragen).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Ansicht (erster Längsschnitt) eines Mehrkoordinaten-Tastmessgeräts gemäß einer erfindungsgemäßen Ausführung,
- FIG 2: eine Ansicht (zweiter Längsschnitt) des Mehrkoordinaten-Tastmessgeräts gemäß einer erfindungsgemäßen Ausführung.

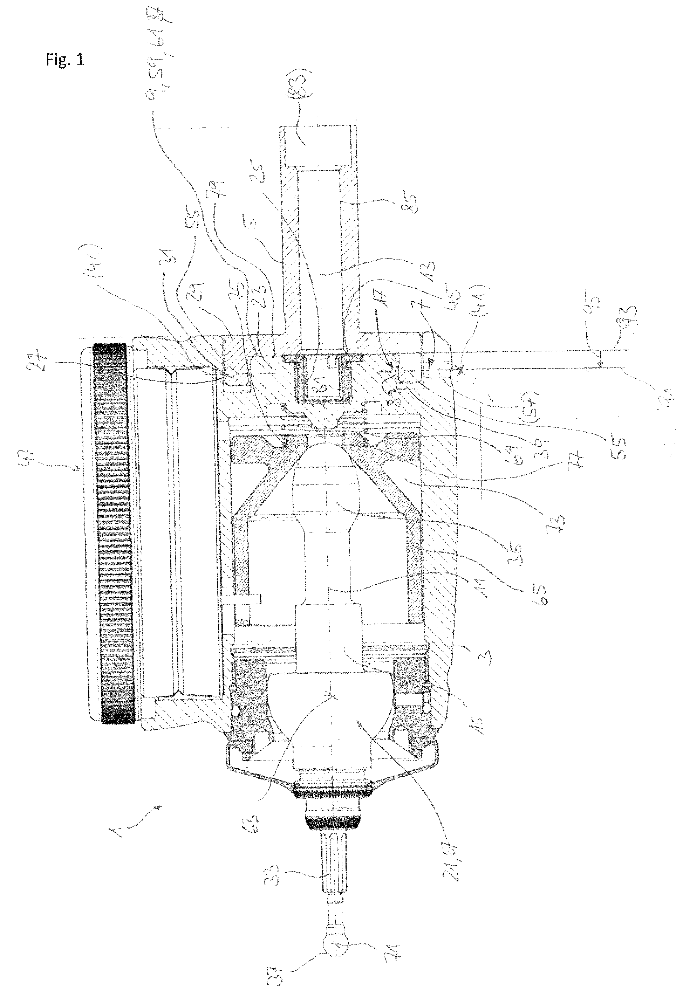

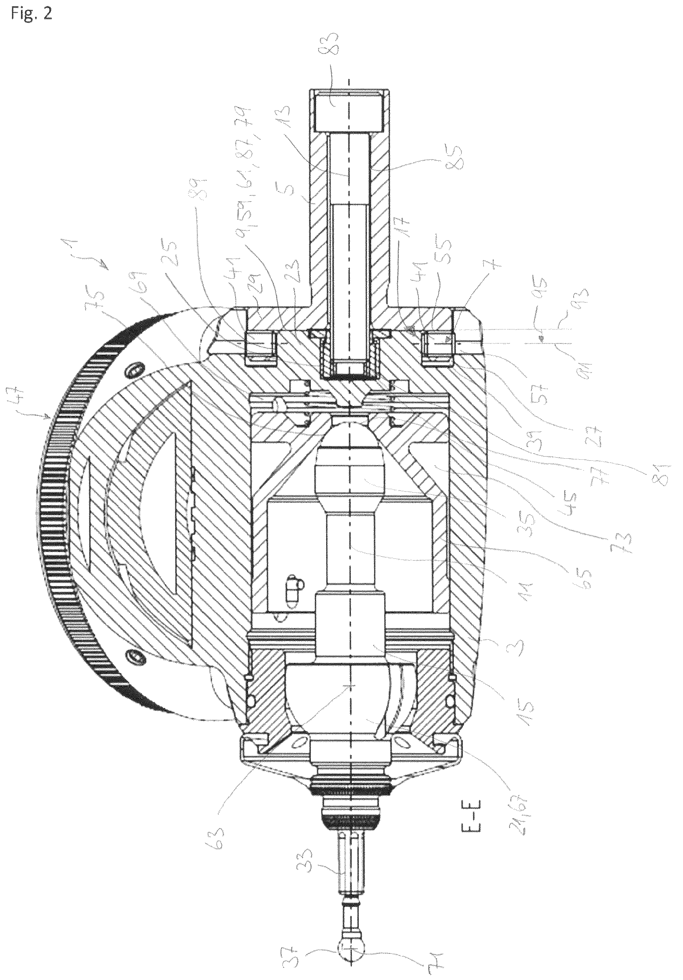

### Mehrkoordinaten-Messgerät mit verbesserter Justierung (Fig. 1 und Fig. 2)

Das in Fig. 1 und Fig. 2 allgemein mit 1 bezeichnete Mehrkoordinaten-Tastmessgerät, im Folgenden nur kur Tastmessgerät 1, umfasst ein Gehäuse 3, an dem ein allgemein mit 15 bezeichneter Tasthebel in Richtung einer durch das Gehäuse 3 definierten Messachse 11 verschiebbar geführt ist.

Der Tasthebel 15 ist mittels eines Universalgelenks 21, hier in Form eines Kugelgelenks 67, darüber hinaus um einen auf der Messachse 11 liegenden Schwenkpunkt 63 allseitig schwenkbar an dem Gehäuse 3 geführt und wird von einer Rückstellfeder 69 in nachfolgend noch näher erläuterter Weise in die in der Zeichnung dargestellte Ruhestellung federnd vorgespannt.

Der Tasthebel 15 hat einen aus dem Gehäuse herausragenden Tastarm 33, dessen freies durch eine Kugel gebildetes Tastende 37 bzw. Tastelement 37 einen in der Ruhestellung des Tasthebels 15 auf der Messachse 11 liegenden Tast-Bezugspunkt 71 definiert. Bezogen auf den Schwenkpunkt 63 ragt ein Koppelarm 35 des Tasthebels 15 entgegengesetzt zum Tastarm 33 in eine kreiszylindrische, zur Messachse 11 zentrische Führungsöffnung 73 des Gehäuses 3 hinein.

In der Führungsöffnung 73 ist ein im Wesentlichen hülsenförmiges Kopplungsstück 65 in Richtung der Messachse 11, beispielsweise mittels einer Führungshülse, beispielsweise einer Kugel-Führungsbüchse der in DE-A-100 14 630 erläuterten Art, verschiebbar geführt (nicht gezeigt).

Eine an dem Gehäuse 3 gehaltene Wegmessvorrichtung in Form einer analogen Messuhr mit Wegsensor und Ziffernblatt 47 erfasst mittels seines Wegsensors die Position des Kopplungsstücks 65 relativ zum Gehäuse 3 und zeigt den Wert der Auslenkung bezogen auf die in Fig. 1 und Fig. 2 dargestellte Ruhestellung des Tasthebels 15 auf seinem Ziffernblatt an. Anstelle der analogen Wegmessvorrichtung kann auch eine digitale Längenmessuhr vorgesehen sein.

Das Kopplungsstück 65 hat im Bereich seines dem Schwenkpunkt 63 axial fernen Endes eine innere Steuerfläche 75 in Form einer Kegelstumpffläche mit geradliniger Erzeugender, mit der es an einer am freien Ende des Koppelarms 35 gebildeten konvexen äußeren Steuerfläche 77 des Tasthebels 5 anliegt. Die innere Steuerfläche 75 ist zur Messachse 11 rotationssymmetrisch, während die äußere Steuerfläche 77 zu der in der Ruhestellung des Tasthebels 15 mit der Messachse 11 zusammenfallenden Geraden durch den Tast-Bezugspunkt 71 und den Schwenkpunkt 63 rotationssymmetrisch ist. Die äußere Steuerfläche 77 hat eine kreisabschnittförmige Erzeugende. Die Rückstellfeder 69 spannt das Kopplungsstück 65 in Richtung auf das Tastende 37 zu vor und sorgt zugleich für einen Anlagekontaktdruck der aneinander anliegenden inneren und äußeren Steuerflächen 75, 77.

Im Betrieb wird das Tastmessgerät 1 - über einen nachfolgend näher beschrieben Tragschaft 5 - mittels einer Normkupplung (nicht gezeigt), beispielsweise einem Steilkegelschaft, in einer Werkzeugmaschine bzw. deren Spindel (oder einem Messgerät oder dergleichen) gehalten.

Bei einer im Messbetrieb sich ergebenden Stellbewegung des Tastendes/Tastelements 37 in Richtung der Messachse 11 nimmt der Koppelarm 35 das Kopplungsstück 65 mit, welches seinerseits die Wegmessvorrichtung 47 stellt. Bei einer Stellbewegung des Tastendes/Tastelements 37 quer zur Messachse 11 schwenkt der Koppelarm 35 um den durch das Kugelgelenk 67 definierten Schwenkpunkt 63. Die bei dieser Schwenkbewegung des Koppelarms 35 entlang ihrer Erzeugenden aneinander gleitenden Steuerflächen 75 und 77 setzen die Schwenkbewegung des Tasthebels 15 in eine axiale Bewegung des hülsenförmigen Kopplungsstück 65 um, derart, dass die Wegmessvorrichtung 47 den radialen Abstand des Tast-Bezugspunkts 71 von der Messachse 11 misst. Für weitere Einzelheiten eines derartigen Tastmessgeräts wird auf DE-A-100 14 630 Bezug genommen.

Das Tastmessgerät 1 ist mit einem Tragschaft 5 versehen, mit dem es in die Normkupplung (nicht gezeigt) oder in eine sonstige Werkzeugaufnahme der Werkzeugmaschine eingespannt werden kann.

Für exakte Messungen ist es erforderlich, dass der Mittelpunkt des Tastelementes 37 auf der Drehachse der Spindel der Werkzeugmaschine (oder des Messgerätes) zentriert ist.

Um radiale Fluchtungsfehler ausgleichen zu können (d.h. radial zentrieren zu können), ist das Gehäuse 3 über eine als allgemeine Zentrierhalterung 7 bezeichnete (auch radiale Justierung 7) Halterung an dem Tragschaft 5 gehalten.

Die Zentrierhalterung 7 erlaubt, den Mittelpunkt des Tastelementes 37 mit der Drehachse der Spindel der Werkzeugmaschine (oder des Messgerätes) zentrieren zu können.

Für die Realisierung dieser Zentrierhalterung/radialen Justierung 7 sieht der Tragschaft 5 einen integral einstückigen an dem Tragschaft 5 angeformten, radial abstehenden Verbindungsflansch 29 mit einen eine Zentrier-/Justieröffnung 17 ausbildenden - axial dem Gehäuse 3 zugewandten - Ringfortsatz/-abschnitt 31 vor.

Am Ringfortsatz/-abschnitt 31 sind mehrere, in diesem Beispielsfall vier, gleichmäßig über den Umfang verteilt angeordnete Gewindelöcher 55 für Justierschrauben 41 (nur angedeutet) vorgesehen.

Am Tragschaft seitigen Ende des Gehäuses 3 bildet eine - zur Messachse 11 konzentrischen - Ringnut 39 einen zentrischen, einstückig an dem Gehäuse 3 ausgebildeten Zapfen 23 aus, wobei eine axiale Stirnseite 79 des Zapfens 23 von anderen Gehäuseaußenflächen axial überragt wird. Vereinfacht und anschaulich ausgedrückt, der Zapfen 23 tritt in die Gehäusekontur zurück.

In den Zapfen 23 bzw. an dessen axialer Stirnseite ist eine zentrale Aussparung 25 vorgesehen, in welche eine Buchse 45 (verschraubt) eingesetzt ist.

Die Buchse 45 sieht ein Innengewinde 81 vor, worüber der Tragschaft 5 mittels einer axialen Spannschraube 83 (nicht dargestellt), die durch eine axiale Bohrung 85 in den Tragschaft 5 führt, mit dem Gehäuse 3 verschraubt bzw. verspannt wird. Dabei gelangt der Tragschaft 5 zur Anlage/Auflage 9 an dem Gehäuse 3 - und zwar mittels einer ersten, die Auflage ausbildenden, achsnormalen Auflage-/Führungs- bzw. Passfläche 59 am Zapfen 23 bzw. an dessen Stirnseite 79 und einer korrespondierenden zweiten, die Auflage ausbildenden, achsnormalen Auflage-/Führungs- bzw. Passfläche 61 am Verbindungsflansch 29 bzw. an einer (dem Gehäuse 3 zugewandten) Stirnseite 87 des Verbindungsflansches 29 radial innerhalb des Ringfortsatzes/-abschnitts 31.

Wird der Tragschaft 5, wie beschrieben, - mittels der axialen Spannschraube 83 - an dem Gehäuse 3 (verspannt) angeschraubt, so greift der Ringfortsatz/-abschnitt 31 des Verbindungsflansches 29 des Tragschafts 5 mit radialem und axialen Spiel 27 in die Ringnut 39 am Gehäuse 3 ein.

Das, insbesondere radiale, Spiel 27 des Ringfortsatzes/- abschnitts 31 in der Ringnut 39 ermöglicht so die radiale Justierung/Zentrierung des Tastelements 37 auf der Spindeldrehachse derart, dass die - in den in Umfangsrichtung verteilt angeordneten radialen Gewindelöchern 55 sitzenden, von radial außen her zugängliche (durch Aussparungen bzw. Bohrungen 57 im Gehäuse 3) - Justierschrauben/Einstellschrauben 41 - bei Justierung/Einstellung durch Einschrauben - sich mit ihren inneren Enden an der nutseitigen Wand 89 des Zapfens 23 abstützen - und so den Tragschaft 5 mit seiner Tragschaftachse 13 bzw. der Messachse 11 (radial) positionieren.

Wesentlich bei der Tastmessvorrichtung 1 ist dabei, dass, wie FIG. 1 und Fig. 2 zeigen, die radiale Justierung 7 des Tragschafts 5 am Gehäuse 3 axial in Tasthebelrichtung hin nach der Auflage 9 des Tragschafts 5 am Gehäuse 3 (vgl. erste achsnormale Auflage-/Führungs- bzw. Passfläche 59 am Zapfen 23 und zweite achsnormale Auflage-/Führungs- bzw. Passfläche 61 am Verbindungsflansch 29) erfolgt. Wie in Fig. 1 und Fig. 2 verdeutlicht, verschiebt sich so die Ebene der Justierung 91 axial in Tasthebelrichtung hin nach der Auflageebene 93 (vgl. FIG. 1/Fig. 2 - axiale Verschiebung 95 bzw. axiale Versetzung 95 der radialen Justierung des Tragschafts am Gehäuse axial in Tasthebelrichtung hin nach der Auflage des Tragschafts am Gehäuse).

Vereinfacht und anschaulich ausgedrückt, die Justierung 9 wird zum Gehäuse hin nach der Anlage - und innerhalb der Gehäusekontur - verlagert, wodurch die Tastmessvorrichtung 1 kompakter und kürzer und stabiler baut. Justiergenauigkeit - und weiter auch Messgenauigkeit - werden erhöht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 1: Tastmessvorrichtung, Tastmessgerät, Mehrkoordinatentastmessgerät
- 3: Gehäuse
- 5: Tragschaft
- 7: (radiale) Justierung, Zentrierhalterung
- 9: Auflage

- 11: Hauptkoordinatenachse/Messachse
- 13: Tragschaftachse
- 15: Tasthebel
- 17: Zentrier-/Justieröffnung

- 21: Universalgelenk
- 23: Zapfen
- 25: Aussparung (am Gehäuse für Buchse)
- 27: Spiel
- 29: Verbindungsflansch

- 31: Ringfortsatz/-abschnitt
- 33: Tast-/Messarm
- 35: Koppelarm
- 37: Tastende mit Tastelement, Tastelement, Tast-/Messspitze
- 39: Ringnut

- 41: Stell-/Justierschraube
- 45: Buchse
- 47: (digitale) Wegemessvorrichtung mit digitalem Wegsensor und Display

- 55: Gewindeloch (für Justierschraube)
- 57: Bohrung/Aussparung (im Gehäuse für Justierschraube)
- 59: erste achsnormale Auflage-/Führungs- bzw. Passfläche am Zapfen 23

- 61: zweite achsnormale Auflage-/Führungs- bzw. Passfläche am Verbindungsflansch 29
- 63: Schwenkpunkt
- 65: (hülsenförmiges) Kopplungsstück
- 67: Kugelgelenk
- 69: Rückstellfeder

- 71: Tast-Bezugspunkt
- 73: Führungsöffnung
- 75: innere Steuerfläche
- 77: äußere Steuerfläche
- 79: axiale Stirnseite (des Zapfens 23)

- 81: Innengewinde (in Buchse 45)
- 83: axiale Spannschraube
- 85: axiale Bohrung (in dem Tragschaft 3 für die axiale Spannschraube 83)
- 87: (dem Gehäuse zugewandte) Stirnseite (des Verbindungsflansches 29)
- 89: nutseitige Wand (des Zapfen 23)

- 91: Ebene für (radiale) Justierung/Zentrierhalterung
- 93: Auflageebene
- 95: axiale Versetzung der radialen Justierung des Tragschafts am Gehäuse axial in Tasthebelrichtung hin nach der Auflage des Tragschafts am Gehäuse

## Patentansprüche

1. **Tastmessvorrichtung,** insbesondere Mehrkoordinaten-Tastmessgerät, mit einem Gehäuse, einem in dem Gehäuse gelagerten Tasthebel und einem Tragschaft, welcher radial justierbar, am Gehäuse aufliegend am Gehäuse befestigbar ist,
**dadurch gekennzeichnet, dass**
die radiale Justierung des Tragschafts am Gehäuse axial in Tasthebelrichtung hin nach der Auflage des Tragschafts am Gehäuse erfolgt.

2. **Tastmessvorrichtung** nach einem der voranstehenden Ansprüche,
**dadurch gekennzeichnet, dass**
der Tragschaft einerends einen Verbindungsflansch, welcher einen eine Zentrier-/Justieröffnung ausbildenden Ringfortsatz/-abschnitt aufweist, aufweist.

3. **Tastmessvorrichtung** nach einem der voranstehenden Ansprüche,
**dadurch gekennzeichnet, dass**
das Gehäuse eine einen Zapfen ausbildende Ringnut aufweist.

4. **Tastmessvorrichtung** nach einem der voranstehenden Ansprüche,
**dadurch gekennzeichnet, dass**
der Zapfen einstückig mit dem Gehäuse ausgebildet ist und/oder eine axiale Stirnseite des Zapfens von anderen Gehäuseaußenflächen axial überragt wird.

5. **Tastmessvorrichtung** nach einem der voranstehenden Ansprüche,
**dadurch gekennzeichnet, dass**
der Ringfortsatz/-abschnitt mit, insbesondere radialem, Spiel in die Ringnut eingreift.

6. **Tastmessvorrichtung** nach einem der voranstehenden Ansprüche,
**dadurch gekennzeichnet, dass**
der Ringfortsatz/-abschnitt mehrere, bevorzugt drei oder vier, gleichmäßig über den Umfang verteilt angeordnete Gewindelöcher für Justierschrauben aufweist.

7. **Tastmessvorrichtung** nach einem der voranstehenden Ansprüche,
**dadurch gekennzeichnet, dass**
eine erste, die Auflage ausbildende, insbesondere achsnormale, Auflage-/Führungs- bzw. Passfläche am Zapfen bzw. an dessen Stirnseite ausgebildet ist und eine korrespondierende zweite, die Auflage ausbildende, insbesondere achsnormale, Auflage-/Führungs- bzw. Passfläche am Verbindungsflansch bzw. an einer Stirnseite des Verbindungsflansches ausgebildet ist.

8. **Tastmessvorrichtung** nach dem voranstehenden Anspruch,
**dadurch gekennzeichnet, dass**
die korrespondierende zweite Auflage-/Führungs- bzw. Passfläche am Verbindungsflansch radial innerhalb des Ringfortsatzes/-abschnitts des Verbindungsflansches ausgebildet ist.

9. **Tastmessvorrichtung** nach einem der voranstehenden Ansprüche,
**dadurch gekennzeichnet, dass**
der Tragschaft eine axiale Bohrung für eine axiale Spannschraube, mit welcher der Tragschaft mit dem Gehäuse verschraubbar ist, aufweist

10. **Tastmessvorrichtung** nach einem der voranstehenden Ansprüche,
**dadurch gekennzeichnet, dass**
bei dem Gehäuse, insbesondere in dem Zapfen des Gehäuses nach Anspruch 3, in einer Aussparung eine, insbesondere ein Innengewinde aufweisende, Buchse eingesetzt ist, mit welcher eine axiale Spannschraube, insbesondere die Spannschraube nach dem vorangehenden Anspruch, verbindbar bzw. einschraubbar ist.

11. **Tastmessvorrichtung** nach einem der voranstehenden Ansprüche,
**dadurch gekennzeichnet, dass**
der um einen Schwenkpunkt schwenkbare Tasthebel einerends des Schenkpunkts einen eine Tast-/Messspitze aufweisenden Tast-/Messarm und andererends des Schwenkpunkts einen Koppelarm aufweist, wobei insbesondere am freien Ende des Koppelarmes eine konvexe, insbesondere kugelförmige, äußere Steuerfläche ausgebildet ist.

12. **Tastmessvorrichtung** nach dem voranstehenden Anspruch,
**dadurch gekennzeichnet, dass**
in dem Gehäuse ein, insbesondere hülsenförmiges, Kopplungsstück axial in Richtung einer Hauptkoordinatenachse/Messachse verschiebbar geführt ist, welches insbesondere einerends eine innere, an der äußeren Steuerfläche anliegende, Steuerfläche in Form einer Kegelstumpffläche mit bevorzugt geradliniger Erzeugenden ausbildet.
